# EUROPEAN PATENT APPLICATION

(11) **EP 1 912 428 A2**
(43) Date of publication of application: **16.04.2008**
(21) Application number: 07016116.1
(22) Date of filing: 16.08.2007
(51) Int. Cl.: H04N 5/225

(54) **Video data transmitting apparatus using metallic body**

(30) Priority: 21.08.2006 KR 20060078587
(71) Applicant: UMB Communications Co., Ltd., Guro-Dong, Guro-Gu Seoul, 152-766 (KR)
(72) Inventor: You, Hong Sik, Gyeonggi-do, 412-818 (KR)
(74) Representative: Schumacher & Willsau

(57) **Abstract**

The present invention relates to video data transmitting apparatus using for metallic body, comprising: an observation camera part in which is transmitted through metallic body of a motor such as automobile, ship, aircraft, and etc. to amplify modulated signal by wideband RF (Radio Frequency) amplifier, the modulated signal in which is modulated as PM (Phase Modulation) by PLL (Phase Locked Loop) process for sound and video signal inputted from mike and camera, the mike and the camera is run using by motive power for electronic power of automobile itself; and a camera control part in which outputs through audio and video output after amplifying modulated signal as stabilized level, the modulated signal in which is modulated as PM by stabilized PLL process, the stabilized PLL process in which is stabilized and amplified output of transmitted sound and video signal through the metallic body of the motor for camera shooting from the observation camera.

Therefore, the present invention provides simple installation and high performance of stable transmission rate because it is not connecting with wires separately but directly connecting to metallic body for receiving sound and video signal as transmitting through metallic body for transmission of sound and video signal of from mike and camera, and to provide of high definition screen for camera shooting as transmitting wideband signal to apply phase modulation process to be modulated phase by stabilized PLL process as not to be emitted necessary spurious radiation power to outside.

## Description

### Technical Field

The present invention relates to video data transmitting apparatus using for metallic body, comprising: an observation camera part in which is transmitted through metallic body of a motor such as automobile, ship, aircraft, and etc. to amplify modulated signal by wideband RF (Radio Frequency) amplifier, the modulated signal in which is modulated as PM (Phase Modulation) by PLL (Phase Locked Loop) process for sound and video signal inputted from mike and camera, the mike and the camera is run using by motive power for electronic power of automobile itself; and a camera control part in which outputs through audio and video output after amplifying modulated signal as stabilized level, the modulated signal in which is modulated as PM by stabilized PLL process, the stabilized PLL process in which is stabilized and amplified output of transmitted sound and video signal through the metallic body of the motor for camera shooting from the observation camera.

### Background Art

The present invention relates to video data transmitting apparatus using for metallic body of the motor, in more details, in which can be transmitted sound and video signal of an observation camera through the metallic body of the automobile.

### Technical Problem

Generally, for instance in driving for automobile, a problem was that it was not easy to check exactly a subject in which was in the rear or the blind spot of automobile by a driver, so the driver had to get off the automobile and checked the subject directly, or someone had to check the subject, thus this was inconvenience, therefore the accident could be happen.

Thus, installing several observation camera at corresponding observation area so that a driver could check the corresponding observation area to confirm the taken picture of each observation camera.

However, video signal pictured by observation camera of the conventional art needed a transmitting cable for video signal in transmission, also separately needed a transmitting cable for control signal to control observation camera and a cable for power supply.

For this, the patent to be able to transmit the signals at once using by electronic power cable without installing separately a transmitting cable for video signal of observation camera, a transmitting cable for control signal to control observation camera, and a power supply cable for power supply to observation camera, was disclosed.

However, observation camera according to the above-mentioned prior art had a troublesome because transmission media of pictured video from the observation camera is using a part of inside electronic wires, and transmission rate could be dropped by disconnect and fault of the wires.

Moreover, modulation system was so complicated and unstable for performance because it was applying frequency modulation process to modulate a carrier wave by strength and weakness of a signal electronic current for transmitting taken picture video from the observation camera.

### Technical Solution

An object of the present invention for overcoming the above-mentioned problems is that transmitting sound and video from mike and camera using for metallic body of automobile, applying PM (Phase Modulation) to modulate a phase about the sound and video signal, thus to provide that a simple structure of modulation system and a high definition screen as transmitting wideband signal with stabilization.

Another object of the present invention is to provide stabilization for output as control gain of sound and video from the mike and the camera automatically.

### Advantageous Effects

Video data transmitting apparatus using for metallic body according to the present invention has effect to provide high performance transmitting rate and simple installation because directly connecting to metallic body without connecting with separate wires in transmitting of sound and video signal from mike and camera.

Moreover, the present invention transmits a signal of wideband to apply phase modulation to modulate a phase about sound and video signal from the mike and the camera, and to apply phase demodulation process to control a gain about the transmitted signal. Thus the present invention has effects that noise of signal is small, and also providing to output high performance sound quality and high definition screen.

### Brief Description of the Drawings

The present invention will become better understand with reference to accompanying drawings which are given only by way of illustration and thus are not limitative of the present invention, wherein;
Figure 1 illustrates a block diagram of an observation camera part of video data transmitting apparatus using for metallic body according to the present invention.
Figure 2 illustrates a block diagram of a camera control part of video data transmitting apparatus using for metallic body according to the present invention.

### Best Mode

The present invention will be described with reference to accompanying drawings in detail hereinafter.

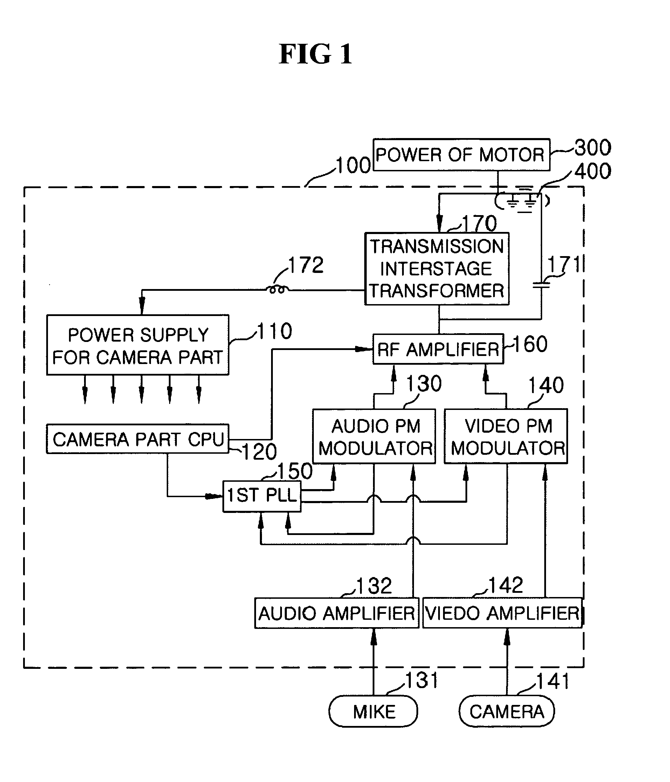

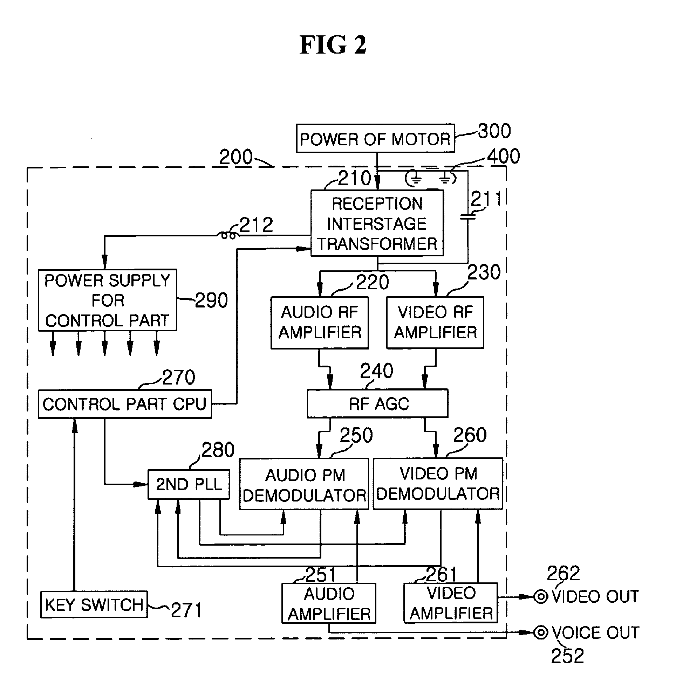

Figure 1 illustrates a block diagram of an observation camera part of video data transmitting apparatus using for metallic body according to the present invention, and Figure 2 illustrates a block diagram of a camera control part of video data transmitting apparatus using for metallic body according to the present invention.

As shown in Figure 1 and Figure 2, the present invention includes mainly as an observation camera part (100) and a camera control part (200) to output received sound and video signal with receiving sound and video signal to be transmitted from the observation camera part (100). The observation camera part (100) and the camera control part (200) are able to transmit signals through metallic body of automobile without any separate wires to connect for data transmission.
Thus, an observation camera part (100) to be transmitted sound and video signal transmitted from mike and camera in which are installed in the rear of the automobile using by metallic body of automobile without any separate connecting wires for data transmission, in which have a camera electronic power supplier (110) to supply electronic power as needed at each part of the observation camera part (100) from electronic power to provide from the automobile (300).
Operating by not only control the observation camera part (100) Receive to supply electronic power from the camera electronic power supplier (110), but also the mike (131) and the camera (141) operates to control of the camera part CPU (120) through camera part CPU (120) to be run for the mike (131) and camera (141) which is installed in the rear of automobile.
The observation camera part (100) has audio PM modulator (130) and video PM modulator (140) to be output signal of RF (Radio Frequency) band to modulate to each PM (Phase Modulation) for sound and video signal from mike (131) and camera (141) to be run by the camera part CPU (120), 1st PLL (Phase Locked Loop) (150) to modulate the audio PM modulator (130) and the video PM modulator (140) to wideband video signal with stability to receive control of the camera part CPU (120), RF amplifier (160) to amplify signal for transmitting RF band signal of the audio PM modulator (130) and video PM modulator (140) in which is stabilized wideband video signal from the 1st PLL (150), to transmit amplified sound and video signal from the RF amplifier to metallic body of automobile (400), and a interstage transformer for transmission (170) to provide electronic power to be supplied from the automobile power (300) to the electronic power supplier (110).
A condenser (171) to be connected with the interstage transformer for transmission (170) transfer amplified RF signal to metallic body of the automobile stably, and a coil (L) (172) prevent to feedback from the amplified RF signal to the observation camera part (100).
In addition, the camera control part (200) amplifies transmitted sound and video signal through metallic body of automobile in the observation camera part (100), and to be stabilized to output with control a gain of the amplified signal, after that to be output with PM demodulation to original signal.
In other words, the camera control part (200) receives transmitted sound and video signal through metallic body (400) in the observation camera part (100), interstage transformer for reception (210) to recapture electronic power to be supplied from the automobile and audio RF amplifier (220) and video RF amplifier (230) to amplify each of sound and video signal to be output in the interstage transformer for reception (210), RF AGC (Automatic Gain Control) (240) to be stable for output to control gain of amplified sound and video signal in the audio RF amplifier (220) and video RF amplifier (230), audio PM demodulator (250) and video PM demodulator (260) to convert to wideband signal for output to outside with PM demodulation of each stabilized sound and video signal in the RF AGC (240), and to output through each of audio out (252) and video out (262) to amplify an output signal of the audio PM demodulator (250) and video PM modulator (260) in audio amplifier (251) and video amplifier (261).

Moreover, a key switch (271) to input directly by a user for controlling of observation camera and to provide camera control signal which is transmitting key input of the key switch (271) to the observation camera part (100), a control part CPU (270) to control each of the camera control part (200) controls 2nd PLL (Phase Locked Loop) (280) to convert frequency signal of the audio PM demodulator (250) and the video PM demodulator (260) to wideband video signal.

In addition, for output electronic power to be provided from the automobile to electronic power as necessary for camera control part, to have a electronic supplier for control part (290) to supply necessary electronic power in each of camera control part (200) from electronic power to be supplied from the reception interstage transformer (210).
Moreover, a condenser (211) to be connected with the reception interstage transformer (210) transmits camera control signal to the observation camera part (100) to transfer to metallic body of automobile with stability, a coil (212) prevents that the camera control signal feedbacks into the camera control part, and to transfer electronic power to the electronic supplier for control part (290).

Therefore, video data transmitting apparatus using for metallic body according to the present invention operates by not only automobile but also power of motor, and can apply all the machines such as ship, aircraft, trailer, crane, and so on having a metallic body, and in case of use of an observation camera for security, it can transmit video using by metallic body without any wires for data transmission separately.

As the above-described desirable examples of the present invention, however the present invention is not limited to the above embodiment. As the present invention may be embodied in several forms without departing from the spirit or essential characteristics thereof, it should also be understood that the above-described examples are not limited by any of the details of the foregoing description, unless otherwise specified, but rather should be constructed broadly within its spirit and scope as defined in the appended claims, and therefore all changes and modifications that fall within the meets and bounds of the claims, or equivalences of such meets and bounds are therefore intended to be embraced by the appended claims.

### Mode for Invention

For overcoming to achieve the above-mentioned objects, the present invention relates to video data transmitting apparatus using for metallic body, comprising: an observation camera part in which is transmitted through metallic body of automobile to amplify modulated signal by wideband RF (Radio Frequency) amplifier, the modulated signal in which is modulated as PM (Phase Modulation) by PLL (Phase Locked Loop) process for sound and video signal inputted from mike and camera, the mike and the camera is run using by motive power for electronic power of automobile itself; and a camera control part in which outputs through audio and video output after amplifying modulated signal as stabilized level, the modulated signal in which is modulated as PM by stabilized PLL process, the stabilized PLL process in which is stabilized and amplified output of transmitted sound and video signal through the metallic body of the automobile for camera shooting from the observation camera.

## Claims

1. Video data transmitting apparatus using for metallic body, comprising:
an observation camera part means for transmitting through a metallic body of a motor such as automobile, ship, aircraft, and etc. to amplify modulated signal by a wideband RF (Radio Frequency) amplifier, the modulated signal modulates sound and video signal to be inputted from mike and camera with operation using by power of the motor itself as PM (Phase Modulation) by PLL (Phase Locked Loop) process; and
a camera control part means for outputting through audio and video output unit after amplifying demodulated signal as stable level, the demodulated signal demodulates output of stable sound and video signal as PM by PLL process, and the output of stable sound and video signal is amplified and stabilized, and transferred through metallic body of the motor for the observation camera part.

2. As in claim 1, wherein said observation camera part to operate by control of CPU with electronic power supply, further comprising:
an audio PM (Phase Modulation) modulator and a video PM modulator means for outputting to RF band signal as modulate each of inputted sound and video signal from the mike and the camera as PM;
a 1st PLL means for modulating signal of the audio PM (Phase Modulation) modulator and video PM modulator to stable wideband video signal to receive control of the camera part CPU;
a RF amplifier means for amplifying for transmitting signal of RF band of the audio PM modulator and video PM modulator in which is stabilized wideband video signal in the 1st PLL; and
a transmission interstage transformer means for providing sources of electricity to be supplied from sources of electricity of the motors itself to power supply of the camera part after transmitting amplified sound and video signal in the RF amplifier to the metallic body of the motor.

3. As in claim 1, wherein said camera control part, further comprising:
a reception interstage transformer means for recapturing sources of electricity to be supplied from sources of electricity of the motor itself, and to receive transmitted sound and video signal through the metallic body of the motor;
RF AGC (Automatic Gain Control) means for stabilizing of output with control gain of RF amplified sound and video signal automatically to receive from the reception interstage transformer;
an audio OM demodulator and a video PM demodulator means for converting to wideband signal for output to outside to demodulate as PM each of stable sound and video signal in RF AGC; and
a 2nd PLL means for converting frequency signal of the audio PM demodulator and the video PM demodulator to wideband video signal with stability.
